# EUROPÄISCHE PATENTANMELDUNG

(11) **EP 1 319 451 A1**
(43) Veröffentlichungstag der Anmeldung: **18.06.2003**
(21) Anmeldenummer: 02027491.6
(22) Anmeldetag: 10.12.2002
(51) Int. Cl.: B21D 39/06, F16L 41/08

(54) **Stutzen für ein Wandteil, insbesondere für ein Wandteil eines Deckels oder Behälters**

(30) Priorität: 11.12.2001 DE 20120029 U; 25.01.2002 DE 20201112 U
(71) Anmelder: Voss Automotive GmbH, 51688 Wipperfürth (DE)
(72) Erfinder: Borgmeier, Olav, 42499 Hückeswagen (DE); Hagen, Harald, 51688 Wipperfürth (DE)
(74) Vertreter: Patentanwälte Dr. Solf & Zapf

(57) **Zusammenfassung**

Die vorliegende Erfindung betrifft einen Stutzen für ein Wandteil (1), insbesondere für ein Wandteil (1, 1a) eines Deckels oder Behälters, wie eine Behälterwand (1a), mit einem von dem Wandteil (1, 1a) abstehenden Rohrstück (2). Das Rohrstück (2) ist im Montagezustand unter Zwischenlage einer Dichtung (3) an dem Wandteil (1, 1a) stirnseitig dichtend befestigt, wobei zum Durchgriff einer Öffnung in dem Wandteil (1, 1a) an dem Rohrstück (2) ein Rohransatz (4) vorhanden ist, der im Montagezustand mit dem Wandteil (1, 1a) eine zumindest formschlüssige, axial spielfreie Verbindung ausbildet.

## Beschreibung

Die vorliegende Erfindung betrifft einen Stutzen für ein Wandteil, insbesondere für ein Wandteil eines Deckels oder Behälters, mit einem von dem Wandteil abstehenden Rohrstück. Dabei kann es sich bei dem Wandteil bevorzugt die Wand eines Druckbehälters handeln, von der das Rohrstück nach außen absteht.

Bei bekannten Stutzen dieser Art bilden insbesondere Stutzen, die stoffschlüssig an dem Wandteil angebracht werden, den Stand der Technik. So ist beispielsweise in der DE 35 20 161 C2 ein "mechanisiertes Verfahren zum Schweißverbinden von dickwandigen Stutzen mit zylindrischen Behälterteilen" beschrieben. Des weiteren sind auch Stutzen bekannt, die ein Rohrgewinde aufweisen und in ein Gewindeloch einer Behälterwand eingeschraubt werden, sowie Ventile für schlauchlose Fahrzeugreifen bei denen ein Gummikörper in die Reifenwandung eingesetzt wird.

Bei allen diesen Verbindungsarten muß entweder der Stutzen vor einer Oberflächenbehandlung, beispielsweise einer Lackierung, an der Deckel- oder Behälterwand angebracht werden, oder das Wandteil muß von beiden Seiten für eine Montage zugänglich sein, oder es kann keine ausreichende Abdichtung, insbesondere gegenüber einem im Behälter befindlichen, unter Druck stehenden Fluid erreicht werden.

Der vorliegenden Erfindung liegt die Aufgabe zugrunde, einen Stutzen der eingangs genannten Art zu schaffen, der in dem Wandteil bei Vorliegen des Endbehandlungszustandes des Behälters befestigbar ist und gleichzeitig die geforderte Dichtwirkung gewährleistet.

Erfindungsgemäß wird dies durch einen Stutzen der eingangs genannten Art erreicht, bei dem das Rohrstück im Montagezustand unter Zwischenlage einer Dichtung an dem Wandteil stirnseitig dichtend befestigt ist wobei zum Durchgriff einer Öffnung in dem Wandteil an dem Rohrstück ein Rohransatz vorhanden ist, der im Montagezustand mit dem Wandteil eine zumindest formschlüssige, axial spielfreie Verbindung ausbildet.

Gemäß der Erfindung kann vorteilhafterweise ein Fügen des Stutzens erst nach der Fertigung und Oberflächenbehandlung des Wandteils erfolgen. Zu diesem Zweck muß die Deckel- oder Behälterwandung lediglich ein einfaches Durchgangsloch aufweisen, dessen Randbereich eine Fläche aufweist, auf der die Dichtung, beispielsweise ein O-oder Profilring, abdichten kann. Ein solches Loch kann beispielsweise in fertigungstechnisch einfacher Weise bei der Herstellung eines Deckels oder Behälters noch vor dem Lackiervorgang eingestanzt werden. Aber auch nach der Lackierung könnte mittels eines Bohrers ein Loch gebohrt werden. Damit die Dichtung auf dem Wandteil dichten kann, sollte die Wandung eben sein bzw. sollte einen minimalen Radius nicht unterschreiten. Ist Letzteres jedoch nicht der Fall, kann eine Plansenkung an der Bohrung angebracht werden, was in einem Arbeitsgang mit dem Bohren des Durchgangsloches mittels eines Formbohrers erfolgen kann.

Weitere vorteilhafte Ausgestaltungsmerkmale der Erfindung sind in den Unteransprüchen sowie der folgenden Beschreibung enthalten.

Anhand mehrerer in der Zeichnung dargestellter, bevorzugter Ausführungsbeispiele soll die Erfindung nun genauer erläutert werden. Dabei zeigen:
- Fig. 1: einen Längsschnitt durch eine erste Ausführung eines fertig montierten erfindungsgemäßen Stutzens einschließlich zweier Anschlußstücke in einem Zwischenzustand der Montage,
- Fig. 2: eine Fig. 1 entsprechende Darstellung der ersten Ausführung eines erfindungsgemäßen Stutzens im Endzustand der Montage,
- Fig. 3: eine Fig. 2 entsprechende Schnittdarstellung einer zweiten Ausführung eines erfindungsgemäßen Stutzens im Endzustand der Montage,
- Fig. 4: eine Fig. 1 entsprechende Ansicht einer dritten Ausführung eines erfindungsgemäßen Stutzens in einem Zwischenzustand der Montage,
- Fig. 5: eine Fig. 2 entsprechende Ansicht der dritten Ausführung eines erfindungsgemäßen Stutzens im Endzustand der Montage,
- Fig. 6: in perspektivischer Explosionsdarstellung, einen Längsschnitt durch eine vierte Ausführung eines fertig montierten erfindungsgemäßen Stutzens einschließlich eines Anschlußstückes,
- Fig. 7: eine Fig. 6 entsprechende, jedoch vergrößerte Darstellung der vierten Ausführung eines erfindungsgemäßen Stutzens in einem Zwischenzustand der Montage,
- Fig. 8: eine Fig. 7 entsprechende Darstellung der vierten Ausführung eines erfindungsgemäßen Stutzens im Endzustand der Montage,
- Fig. 9: in perspektivischer Explosionsdarstellung, eine Ansicht einer fünften Ausführung eines fertig montierten erfindungsgemäßen Stutzens einschließlich eines Anschlußstückes,
- Fig. 10: eine Fig. 8 entsprechende Schnittdarstellung der fünften Ausführung eines erfindungsgemäßen Stutzens im Endzustand der Montage,
- Fig. 11: in perspektivischer Explosionsdarstellung, eine Ansicht einer sechsten Ausführung eines erfindungsgemäßen Stutzens einschließlich eines Anschlußstückes in einem Zwischenzustand der Montage,
- Fig. 12: eine Fig. 7 entsprechende Schnittdarstellung der sechsten Ausführung eines erfindungsgemäßen Stutzens im Zwischenzustand der Montage,
- Fig. 13: eine Fig. 8 und 10 entsprechende Schnittdarstellung der sechsten Ausführung eines erfindungsgemäßen Stutzens im Endzustand der Montage,
- Fig. 14: eine Schnittdarstellung einer siebenten Ausführung eines erfindungsgemäßen Stutzens,
- Fig. 15: eine Schnittdarstellung der siebenten Ausführung eines erfindungsgemäßen Stutzens im Endzustand der Montage, mitsamt des Druckbehälters, in den der Stutzen montiert ist,
- Fig. 16: in vergrößerter Darstellung gegenüber Fig. 15, die siebente Ausführung eines erfindungsgemäßen Stutzens im Endzustand der Montage.

In den verschiedenen Figuren der Zeichnung sind gleiche und einander entsprechende Teile stets mit denselben Bezugszeichen versehen und werden daher in der Regel auch jeweils nur einmal beschrieben.

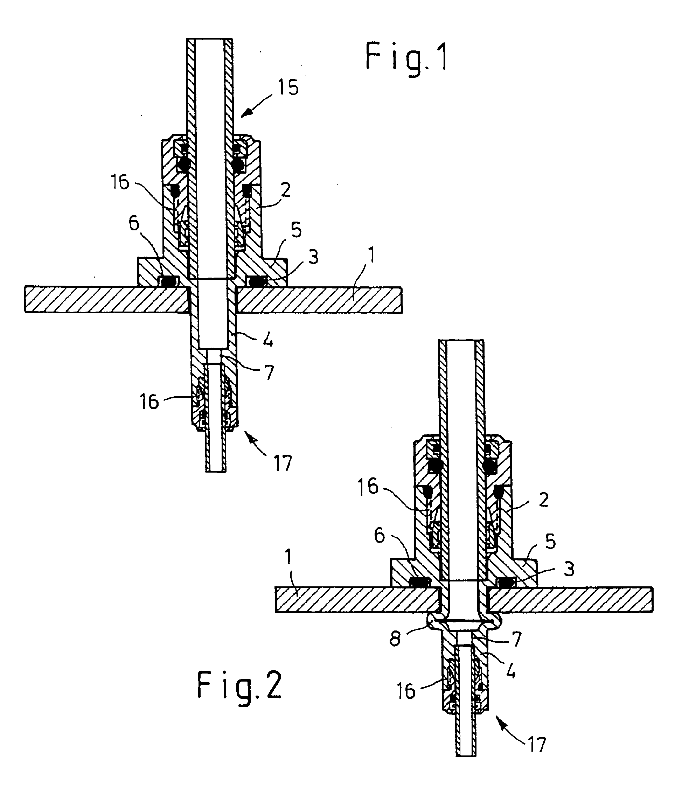

Wie sich zunächst aus Fig. 1 und 2 ergibt, die eine erste Ausführung der Erfindung zeigen, weist ein erfindungsgemäßer Stutzen für ein Wandteil 1, insbesondere für ein Wandteil 1 eines Deckels oder Behälters, ein von dem Wandteil 1 abstehendes Rohrstück 2 auf. Das Rohrstück 2 kann in das Innere des Deckels, Behälters oder dergleichen oder auch nach außen abstehen.

Das Rohrstück 2 ist im Montagezustand unter Zwischenlage einer Dichtung 3 an dem Wandteil 1 stimseitig dichtend befestigt. Zum Durchgriff einer (nicht näher bezeichneten) Öffnung in dem Wandteil 1 ist an dem Rohrstück 2 ein Rohransatz 4 vorhanden, der im Montagezustand mit dem Wandteil 1, da er an die Größe der Durchgangsöffnung in dem Wandteil 1 angepaßt ist, eine zumindest formschlüssige, axial spielfreie Verbindung ausbildet. Dies trifft für alle Ausführungsformen der Erfindung zu.

Das Rohrstück 2 weist zur stirnseitigen Anlage an dem Wandteil 1 ein Flanschteil 5 auf. Das Flanschteil 5 weist stimseitig eine Nut 6, insbesondere eine Ringnut, zur Aufnahme der Dichtung 3 auf. Die Dichtung 3 ist aus einem O-Ring gebildet.

Das Rohrstück 2, das Flanschteil 5 und der Rohransatz 4 bestehen aus einem Stück, wobei der Rohransatz 4 zur Bildung der Verbindung mit dem Wandteil 1 aus einem plastisch verformbaren Material, insbesondere einem dünnwandigen Blech, besonders bevorzugt aus bördelfähigem Messing, besteht. Weiterhin kann auch ein Material, wie ein warm umformbarer Kunststoff eingesetzt werden. Der Bereich der Kraft, bei der die plastische Verformung auftritt, ist dabei charakterisiert durch typische Kräfte, wie sie bei technischen Umformvorgängen, wie beispielsweise beim Blechbiegen oder Nieten, auftreten.

Der Rohransatz 4 kann an seinem wandteilseitigen Ende Mittel, insbesondere einen Gewindeabschnitt 7, zur Befestigung eines (nicht dargestellten) Zugankers aufweisen. Mittels eines solchen, mit dem Innengewinde des Gewindeabschnitts 7 verschraubten Zugankers kann der Rohransatz 4, nachdem er durch die Öffnung in dem Wandteil 1 geführt wurde (Fig. 1) durch Aufbringung einer Zugkraft derart verformt werden, daß die axial spielfreie und dichte Verbindung entsteht (Fig. 2). Die Verbindung mit dem Wandteil 1 ist dabei eine form- und kraftschlüssige, indem ein verformter Abschnitt 8 die Öffnung in dem Wandteil 1 randseitig übergreift, wobei das Flanschteil 5 des Rohransatzes 2 mit der Dichtung 3 dadurch fest auf das Wandteil 1 gepreßt wird. Die Montage des erfindungsgemäßen Stutzens kann vorteilhafterweise bei einem in einem Behälter im Inneren liegenden verformten Abschnitt 8 von außen, durch das Wandteil 1 hindurch, erfolgen.

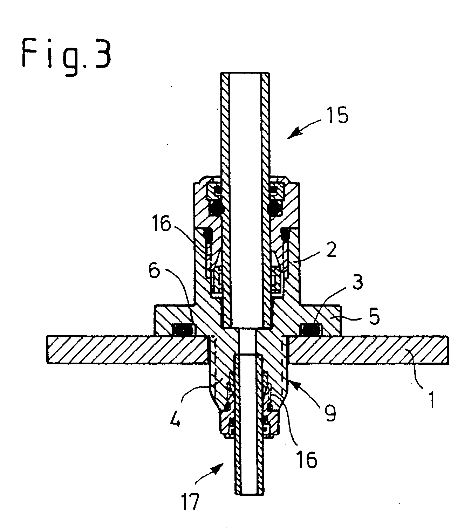

Die in Fig. 3 dargestellte zweite Ausführung der Erfindung unterscheidet sich von der ersten Ausführung durch die Art und Weise, wie die zumindest formschlüssige, axial spielfreie Verbindung zwischen Wandteil 1 und Rohransatz 4 ausgebildet wird. Auch hier handelt es sich um eine form- und kraftschlüssige Verbindung, die jedoch dadurch erreicht wird, daß der Rohransatz 4 zur Bildung der Verbindung mit der Wandteil 1 ein spezielles selbstfurchendes Außengewinde 9 aufweist. Derartige Gewinde sind an sich bekannt, wobei diese beispielsweise bei Blechschrauben zu finden sind, die in den DIN 7971, 7982 und 7976 beschrieben sind. Durch die Verschraubung wird auch hier gesichert, daß das Flanschteil 5 des Rohransatzes 2 mit der Dichtung 3 fest auf das Wandteil 1 gepreßt wird.

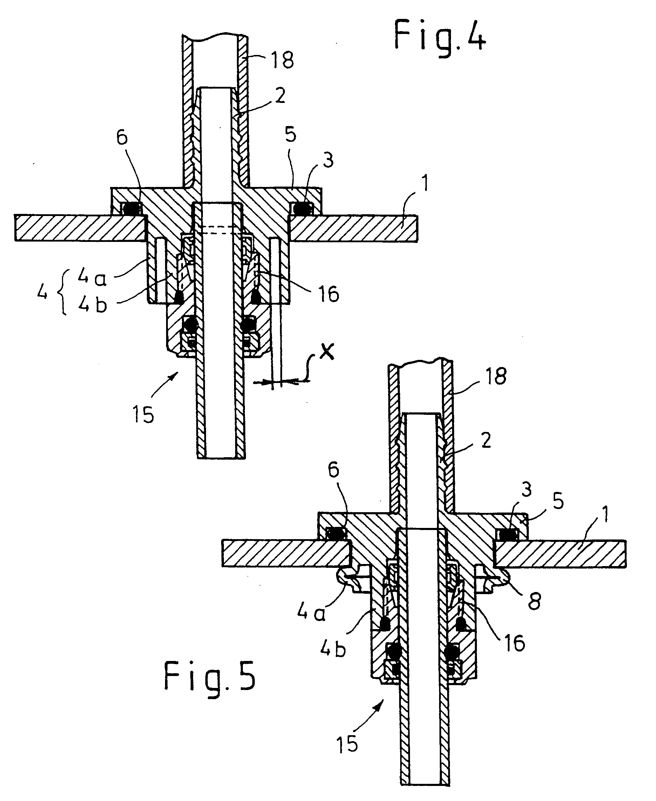

Fig. 4 und 5 veranschaulichen eine dritte Ausführung der Erfindung. Diese ist der ersten Ausführung der Erfindung ähnlich, wobei für sie charakteristisch ist, daß der Rohransatz 4 zur Bildung der Verbindung mit der Wandteil 1 doppelwandig ausgebildet ist. Er besteht aus einem Außenrohrabschnitt 4a und aus einem Innenrohrabschnitt 4b, die konzentrisch und beabstandet (Abstand X zwischen der Innenwand des Außenrohrabschnittes 4a und der Außenwand des Innenrohrabschnittes 4b) zueinander angeordnet, aber fußseitig (im Montagezustand etwa in der Ebene des Wandteils 1) miteinander verbunden sind. Die Verbindung mit dem Wandteil 1 ist dabei wiederum eine form- und kraftschlüssige, indem (wie gemäß der ersten Ausführung) ein verformter Abschnitt 8 die Öffnung in dem Wandteil 1 randseitig übergreift, wobei das Flanschteil 5 des Rohransatzes 2 mit der Dichtung 3 dadurch fest auf das Wandteil 1 gepreßt wird. Der verformte Abschnitt 8 des Rohransatzes 4 entsteht dabei durch eine ausschließliche Verformung (Stauchung oder Bördelung nach außen) des Außenrohrabschnittes 4a. Bei dieser Ausführung liegt vorteilhafterweise eine Trennung der Befestigungsfunktion (gewindefreier Außenrohrabschnitt 4a) und der Anschlußfunktion (Innenrohrabschnitt 4b mit Gewinde 16) des erfindungsgemäßen Stutzens vor, wodurch die Gesamtfunktion des Stutzens hinsichtlich ihrer Zuverlässigkeit optimiert wird.

Gemäß der Erfindung muß vorteilhafterweise weder der Stutzen vor einer Oberflächenbehandlung, wie einer Lackierung, an dem Wandteil 1 montiert werden, noch ist es bei der ersten und zweiten Ausführung der Erfindung notwendig, daß das Wandteil 1 von beiden Seiten für die Montage zugänglich sein muß.

Bei den Ausführungen der Erfindung können mit dem jeweiligen Stutzen in an sich bekannter Weise Anschlußstücke, wie beispielsweise die (in Fig. 1 bis 3 - außenseitig und in Fig. 4, 5 - innenseitig) dargestellte mehrteilige Armatur 15 zum jeweiligen Anschluß einer Leitung, verbunden werden. Dazu kann der Stutzen, wie dargestellt, z.B. entsprechende Innengewinde 16 aufweisen oder auch Rastmittel zur Ausbildung einer Schnellverbindung. Die Anschlußstücke können dabei - wie dargestellt - sowohl mit dem abstehenden Rohrstück 2, als auch mit dem Rohransatz 4 verbunden werden - also innen und außen, beidseitig des Wandteiles 1. So zeigen Fig. 1 bis 3 am Rohrstück 2 die Armatur 15 und am Rohransatz 4 eine gleichartige, jedoch kleinere Armatur 17. Bei der dritten Ausführung der Erfindung ist das Rohrstück 2 derart ausgebildet, daß beispielsweise eine Schlauchleitung 18 in einfacher Weise darauf aufgesteckt werden kann.

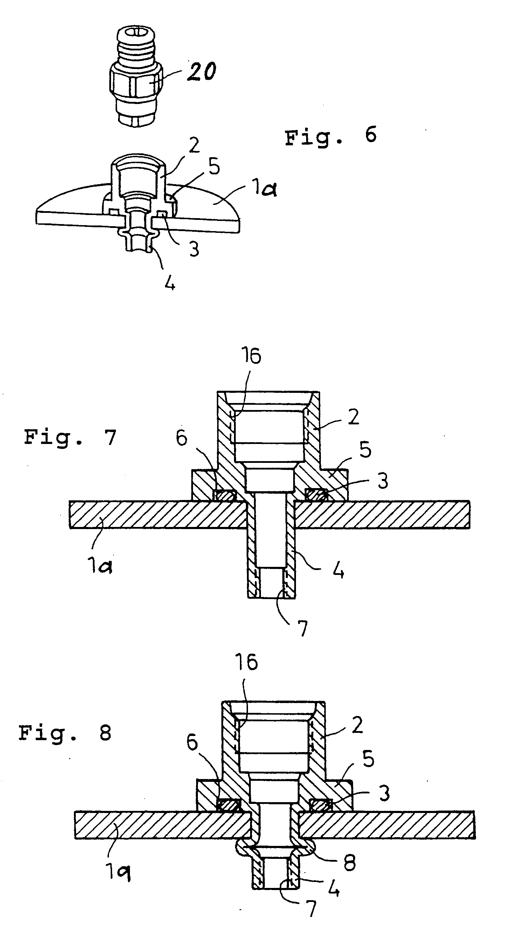

Wie sich des weiteren aus Fig. 6 bis 8 ergibt, die eine vierte Ausführung der Erfindung zeigen, weist auch hier ein erfindungsgemäßer Stutzen für ein Wandteil 1 (speziell eine Behälterwand 1a, insbesondere eines Druckbehälters) ein von der Behälterwand 1a nach außen abstehendes Rohrstück 2 auf.

Das Rohrstück 2 ist im Montagezustand ebenfalls unter Zwischenlage einer Dichtung 3 an der Behälterwand 1a stirnseitig dichtend befestigt. Zum Durchgriff einer (nicht näher bezeichneten Öffnung) in der Behälterwand 1a ist an dem Rohrstück ein Rohransatz 4 vorhanden, der im Montagezustand mit der Behälterwand 1a, da er an die Größe der Durchgangsöffnung in der Behälterwand 1a angepaßt ist, eine zumindest formschlüssige, axial spielfreie Verbindung ausbildet.

Wie in den vorhergehenden Ausführungen weist das Rohrstück 2 gemäß der vierten Ausführung der Erfindung zur stirnseitigen Anlage an der Behälterwand 1a ein Flanschteil 5 auf. Das Flanschteil 5 weist stimseitig eine Nut 6, insbesondere eine Ringnut, zur Aufnahme der Dichtung 3 auf. Die Dichtung 3 ist wiederum vorzugsweise aus einem O-Ring gebildet.

Das Rohrstück 2, das Flanschteil 5 und der Rohransatz 4 bestehen einstückig aus Metall, wobei der Rohransatz 4 zur Bildung der Verbindung mit der Behälterwand 1a aus einem unter Krafteinwirkung plastisch verformbaren Material, insbesondere aus einem dünnwandigen Blech, besonders bevorzugt aus bördelfähigem Messing, besteht. Der Bereich der Kraft, bei der die plastische Verformung eintritt, ist dabei charakterisiert durch typische Kräfte, wie sie bei technischen Umformvorgängen, wie beispielsweise beim Blechbiegen oder Nieten, auftreten.

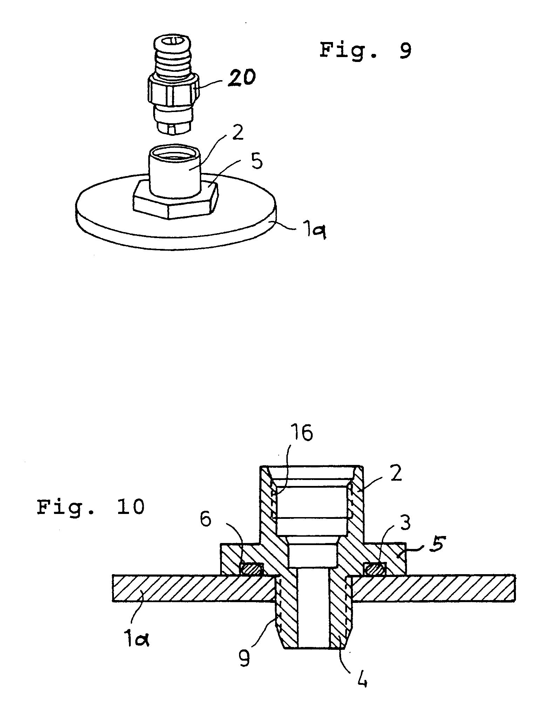

Der Rohransatz 4 weist an seinem behälterseitigen Ende Mittel, insbesondere einen Gewindeabschnitt 7, zur Befestigung eines (nicht dargestellten) Zugankers auf. Mittels eines solchen, mit dem Innengewinde des Gewindeabschnitts 7 verschraubten Zugankers kann der Rohransatz 4, nachdem er durch die Öffnung in der Behälterwand 1a geführt wurde (Fig. 7) durch Aufbringung einer Zugkraft derart verformt, insbesondere gestaucht, werden, daß die axial spielfreie und dichte Verbindung entsteht (Fig. 8). Die Verbindung mit der Behälterwand 1a ist dabei eine form- und kraftschlüssige, indem ein verformter Abschnitt 8 des Rohransatzes 4 die Öffnung in der Behälterwand 1a randseitig übergreift, wobei das Flanschteil 5 des Rohransatzes 2 mit der Dichtung 3 dadurch fest auf die Behälterwand 1a gepreßt wird.

Die in Fig. 9 und 10 dargestellte fünfte Ausführung der Erfindung unterscheidet sich von der vorhergehend dargestellten Ausführung durch die Art und Weise, wie die zumindest formschlüssige, axial spielfreie Verbindung zwischen Behälterwand 1a und Rohransatz 4 ausgebildet wird. Auch hier handelt es sich um eine form- und kraftschlüssige Verbindung, die jedoch - wie in der zweiten Ausführung der Erfindung - dadurch erreicht wird, daß der Rohransatz 4 zur Bildung der Verbindung mit der Behälterwand 1a ein spezielles Außengewinde 9 aufweist. Wie bereits erwähnt, sind derartige Gewinde an sich bekannt und beispielsweise bei Blechschrauben zu finden (in DIN 7971, 7982 und 7976 beschrieben). Von der zweiten Ausführung der Erfindung unterscheidet sich die fünfte Ausführung durch die andere Art der Innenkontur von Rohrstück 2 und Rohransatz 4.

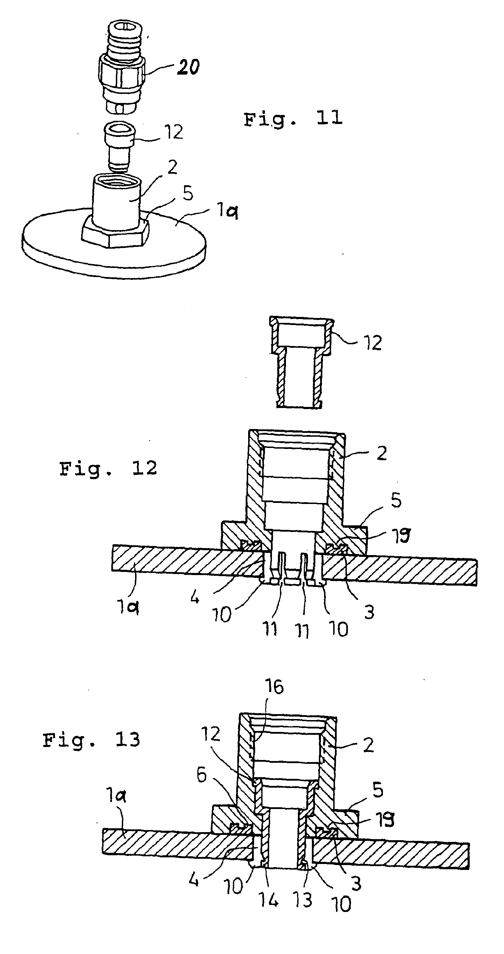

Fig. 11 bis 13 veranschaulichen eine sechste Ausführung der Erfindung. Für diese ist charakteristisch, daß der Rohransatz 4 zur Bildung der Verbindung mit der Behälterwand 1a radialelastisch verformbar ist und endseitige Rastmittel 10, insbesondere radial nach außen gerichtete, im Montagezustand den Rand der Öffnung in der Behälterwand 1a hintergreifende Rastnasen, aufweist, die mit der Innenseite der Behälterwand 1a zusammenwirken. Zur Erzielung der radialelastischen Verformbarkeit weist der Rohransatz 4 dabei eine axiale Mehrfachschlitzung 11 auf, wie dies insbesondere Fig. 12 verdeutlicht.

Mittels eines in den Rohransatz 4 einsetzbaren und mit dem Rohransatz 4 verrastbaren hohlen Spreizkörpers 12 kann der Rohransatz 4, nachdem er unter radialer Deformation seines geschlitzten Bereiches nach innen durch die Öffnung in der Behälterwand 1a geführt wurde (Fig. 12) durch Einsetzen und Verrasten des Spreizkörpers 12 derart fixiert werden, daß eine axial spielfreie und dichte Verbindung entsteht (Fig. 13). Dabei wird durch eine auf dem Grund der Nut 6 angeordnete, insbesondere ausgeformte, Kompressionswulst 19 der O-Ring derart verpreßt, daß der Rohransatz 4 vorgespannt wird.

Zur Bildung der Rastverbindung zwischen dem Spreizkörper 12 und dem Rohransatz 4 weisen die beiden Teile dabei entsprechende miteinander zusammenwirkende Rastmittel 13, 14, wie einen inneren Absatz 13 im Rohransatz 4 und eine äußere Randwulst 14 am Spreizkörper 12, auf, wie dies insbesondere Fig. 13 veranschaulicht. Eine dem Formschluß überlagerte Kraftschlüssigkeit der Verbindung von Stutzen und Behälterwand 1a (wodurch das Flanschteil 5 des Rohransatzes 2 mit der Dichtung 3 fest auf die Behälterwand 1a gepreßt wird) kann bei der sechsten Ausführung der Erfindung insbesondere durch eine geeignete Gestaltung der Rastmittel 10, 13 des Rohransatzes 4 zur Verrastung mit der Behälterwand 1a sowie mit dem Spreizkörper 12 und der Rastmittel 14 des Spreizkörpers 12 zur Verrastung mit dem Rohransatz 4 erreicht werden, indem die Rastmittel 10, 13, 14 jeweils Schrägflächen aufweisen, die bewirken, daß in den Rastverbindungen sowohl radial als auch axial wirkende Kräfte unterschiedlicher Größe vorliegen können.

Gemäß der Erfindung muß vorteilhafterweise weder der Stutzen vor einer Oberflächenbehandlung, wie einer Lackierung, an der Behälterwand 1a montiert werden, noch ist es notwendig, daß die Behälterwand 1a von beiden Seiten für die Montage zugänglich sein muß.

Auch bei der dritten bis sechsten Ausführung kann mit dem Stutzen in an sich bekannter Weise ein Anschlußstück 20, wie beispielsweise die dargestellte Armatur, zum Anschluß einer Leitung, verbunden werden. Dazu kann der Stutzen, wie dargestellt, z.B. ein entsprechendes Innengewinde 16 aufweisen oder wiederum auch Rastmittel zur Ausbildung einer Schnellverbindung.

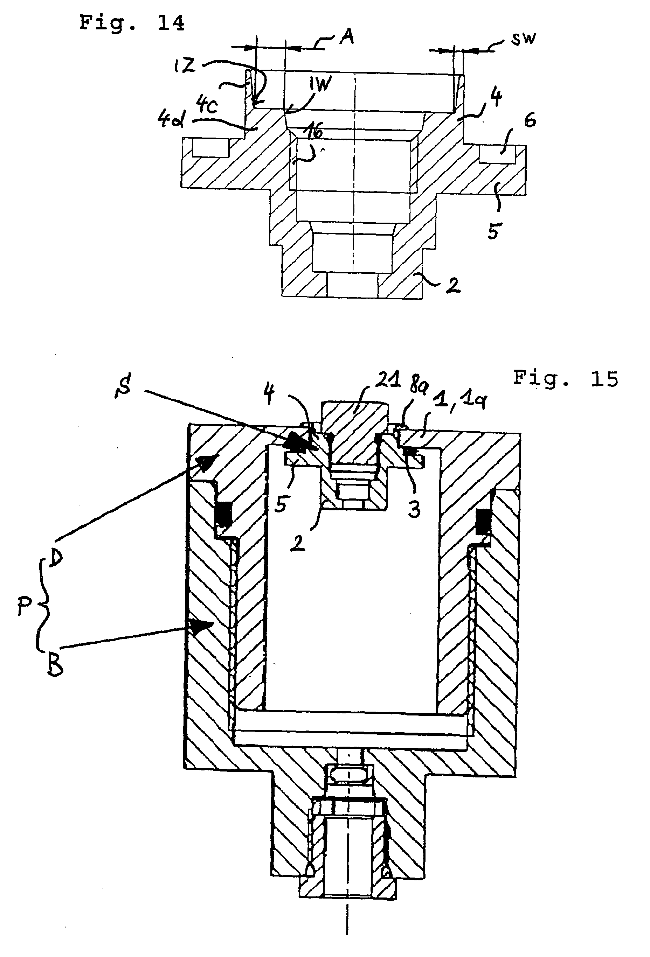

Bei der in Fig. 14 bis 17 dargestellten siebenten Ausführung eines erfindungsgemäßen Stutzens handelt es sich wie bei der ersten, dritten und vierten Ausführung um eine Variante, bei der der Rohransatz 4 zur Bildung der Verbindung mit dem Wandteil 1 zumindest teilweise aus einem unter Krafteinwirkung plastisch verformbaren Material besteht.

In Fig. 15 ist dabei - wie erwähnt - der erfindungsgemäße Stutzen (mit dem Bezugszeichen S bezeichnet) im Endzustand der Montage in einem Druckbehälter P, dargestellt, welcher aus einem Basisteil B und einem Deckelteil D besteht. Das Deckelteil D greift in das Basisteil B ein, so daß der Behälter P eine Doppelwand aufweist. Der Stutzen S ist in einem Wandteil 1 des Deckelteiles D montiert und durch ein Stopfenteil 21 verschlossen.

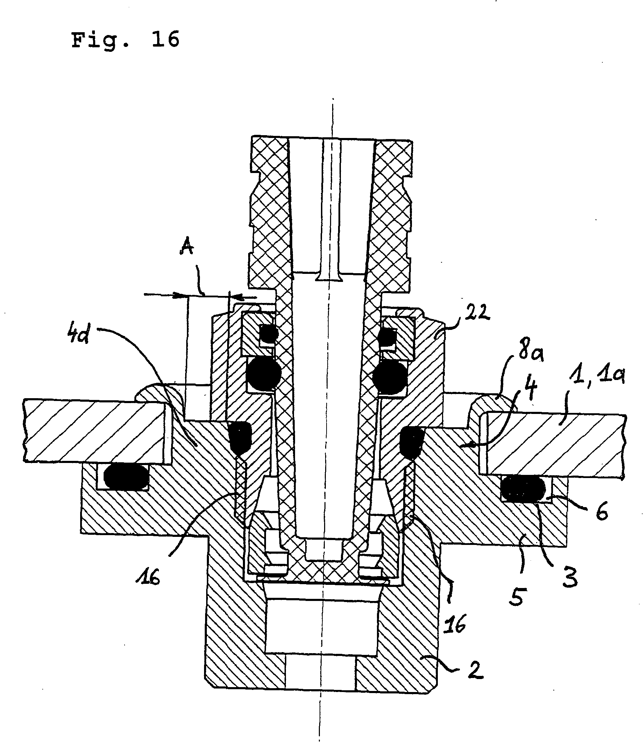

Im Unterschied zu den übrigen Varianten mit einem bördelfähigen Rohransatz 4 ist in dieser Ausführung nicht ein Mittelteil des Rohransatzes 4 zur Bördelung vorgesehen, sondern ein kreisringförmiger endständiger Bördelabschnitt 4c (Fig. 14) des Rohransatzes 4, der bei der Montage zentrisch nach außen aufgebördelt wird und dadurch im Montagezustand kragenartig auf dem Wandungsteil 1 aufliegt (siehe Fig. 15 und insbesondere Fig. 16, mit dem Bezugszeichen 8a bezeichnet). In der dargestellten Ausführung erfolgt die Bördelung an der Außenseite des Deckels D des Druckbehälters P.

Auch bei dieser Ausführung liegt vorteilhafterweise eine Trennung der Befestigungsfunktion und der Anschlußfunktion des erfindungsgemäßen Stutzens S vor, wodurch die Gesamtfunktion des Stutzens S hinsichtlich ihrer Zuverlässigkeit optimiert wird. Die Funktionstrennung wird dabei einerseits durch die Endständigkeit des Bördelabschnitts 4c erreicht, wobei dieser andererseits auch einen gegenüber einem übrigen, einem Basisabschnitt 4d des Rohransatzes 4 erweiterten Innendurchmesser aufweist, so daß zwischen der Innenwand IW des Basisabschnitts 4d, der zur Verbindung mit einem Anschlußteil 21, 22 wiederum ein Innengewinde 16 aufweisen kann, und der Innenwand IZ (Durchmesser am Fuß) des Bördelabschnitts 4c ein Abstand A vorliegt. Durch diese axiale Beabstandung A wird ein Kreisring gebildet, dessen Fläche groß genug ist, um als stimseitige Anlagefläche für ein Anschlußteil 21, 22, wie das in Fig. 15 dargestellte Stopfenteil 21 oder das in Fig. 16 dargestellte, in den Basisabschnitt 4d eingreifende Anschlußteil 22, zu dienen, wobei das montierte Anschlußteil 21, 22 nicht in Berührung mit der Bördelung 8a kommt.

Wie in Fig. 14 dargestellt kann sich die Wandstärke sw des Bördelabschnitts 4c mit Vorteil im Sinne einer besseren Durchführung des Bördelns ausgehend vom am Basisabschnitt 4d befindlichen Fuß des Bördelabschnitts 4c in Richtung auf das freie Ende des Bördelabschnitts 4c hin verjüngen.

Dieses letztgenannte Merkmal könnte auch in Verbindung mit der in Fig. 4 und 5 dargestellten Ausführung realisiert werden, die ebenfalls so aufgefaßt werden kann, daß sie einen aufbördelbaren Bördelabschnitt (in diesem Fall Bezugszeichen 4a) und einen Basisabschnitt (Bezugszeichen 4b) aufweist. Auch könnte dort der Bördelabschnitt 4a ebenfalls so ausgeführt werden, daß beim Bördeln keine Knickung, sondern eine kragenartige Aufweitung entsteht.

Die Erfindung ist nicht auf die dargestellten Ausführungsbeispiele beschränkt, sondem umfaßt auch alle im Sinne der Erfindung gleichwirkenden Ausführungen. So können am Stutzen beispielsweise verschiedenartige Dichtungen zum Einsatz kommen. Wie insbesondere Fig. 1, 3, 4, 15 und 16 zeigen, können sowohl am bzw. im Rohrstück 2 (in Bezug auf das Wandteil 1 innen- oder außenliegend) als auch am Rohransatz 4 (in Bezug auf das Wandteil 1 innen- oder außenliegend) die verschiedenartigsten an sich bekannten Anschlüsse realisiert werden, wie beispielsweise der in Fig. 16 dargestellte Anschluß, bei dem das mit dem Basisabschnitt 4d über das Gewinde 4d verschraubte Anschlußteil 22 der Aufnahme weiterer Armaturteile dient.

Ferner ist die Erfindung nicht auf die im Anspruch 1 definierte Merkmalskombination beschränkt, sondem kann auch durch jede beliebige andere Kombination von Merkmalen aller insgesamt offenbarten Einzelmerkmale definiert sein. Dies bedeutet, daß grundsätzlich jedes Einzelmerkmal des Anspruchs 1 weggelassen bzw. durch mindestens ein an anderer Stelle der Anmeldung offenbartes Merkmal ersetzt werden kann. Insofem ist der Anspruch 1 lediglich als ein erster Formulierungsversuch für eine Erfindung zu verstehen.

### Bezugszeichen

- 1: Wandteil
- 1a: Behälterwand (Sonderfall von 1)
- 2: Rohrstück
- 3: Dichtung
- 4: Rohransatz an 2
- 4a: Außenrohrabschnitt von 4
- 4b: Innenrohrabschnitt von 4
- 4c: endständiger Bördelabschnitt von 4
- 4d: Basisabschnitt von 4
- 5: Flanschteil von 2
- 6: Nut in 5
- 7: Gewindeabschnitt in 4 für Zuganker
- 8: verformter Abschnitt von 4
- 8a: verformter Bördelabschnitt 4c
- 9: Außengewinde von 4
- 10: Rastmittel an 4 für 1
- 11: Mehrfachschlitzung in 4
- 12: Spreizkörper für 4
- 13: innerer Absatz in 4
- 14: äußere Randwulst von 12
- 15: Armatur
- 16: Innengewinde für 15, 17, 20
- 17: Armatur
- 18: Schlauchleitung
- 19: Kompressionswulst in 6 für 3
- 20: Anschlußstück
- 21: Stopfenteil
- 22: Anschlußteil
- A: Abstand Innendurchmesser 4c/4d
- B: Basisteil von P
- D: Deckelteil von P
- IW: Innenwand von 4d
- IZ: Innenwand von 4c
- P: Druckbehälter
- S: Stutzen
- sw: Wandstärke von 4c

## Patentansprüche

1. Stutzen für ein Wandteil (1), insbesondere für ein Wandteil (1, 1 a) eines Deckels oder Behälters, wie eine Behälterwand (1a), mit einem von dem Wandteil (1, 1a) abstehenden Rohrstück (2),
**dadurch gekennzeichnet, daß** das Rohrstück (2) im Montagezustand unter Zwischenlage einer Dichtung (3) an dem Wandteil (1, 1a) stirnseitig dichtend befestigt ist wobei zum Durchgriff einer Öffnung in dem Wandteil (1, 1a) an dem Rohrstück (2) ein Rohransatz (4) vorhanden ist, der im Montagezustand mit dem Wandteil (1, 1a) eine zumindest formschlüssige, axial spielfreie Verbindung ausbildet.

2. Stutzen nach Anspruch 1,
**dadurch gekennzeichnet, daß** der Formschlußverbindung des Rohransatzes (4) mit dem Wandteil (1, 1a) ein Kraftschluß überlagert ist.

3. Stutzen nach Anspruch 1 oder 2,
**dadurch gekennzeichnet, daß** das Rohrstück (2) zur stirnseitigen Anlage an dem Wandteil (1, 1a) ein Flanschteil (5) aufweist.

4. Stutzen nach einem der Ansprüche 1 bis 3,
**dadurch gekennzeichnet, daß** das Rohrstück (2), gegebenenfalls das Flanschteil (5), und der Rohransatz (4) einstückig aus Metall oder einem umformbaren Kunststoff bestehen.

5. Stutzen nach einem der Ansprüche 1 bis 4,
**dadurch gekennzeichnet, daß** das Rohrstück (2), insbesondere das Flanschteil (5), stirnseitig eine Nut (6), insbesondere eine Ringnut, zur Aufnahme der Dichtung (3) aufweist.

6. Stutzen nach Anspruch 5,
**dadurch gekennzeichnet, daß** in der Nut (6) eine Kompressionswulst (19) für die Dichtung (3) angeordnet ist.

7. Stutzen nach einem der Ansprüche 1 bis 6,
**dadurch gekennzeichnet, daß** die Dichtung (3) aus einem O-Ring gebildet ist.

8. Stutzen nach einem der Ansprüche 1 bis 7,
**dadurch gekennzeichnet, daß** der Rohransatz (4) zur Bildung der Verbindung mit dem Wandteil (1, 1a) ein Außengewinde (9) nach der Art einer Blechschraube aufweist.

9. Stutzen nach einem der Ansprüche 1 bis 7,
**dadurch gekennzeichnet, daß** der Rohransatz (4) zur Bildung der Verbindung mit dem Wandteil (1, 1a) zumindest teilweise aus einem unter Krafteinwirkung plastisch verformbaren Material, vorzugsweise bördelfähigem Messing, besteht.

10. Stutzen nach Anspruch 9,
**dadurch gekennzeichnet, daß** der Rohransatz (4) an seinem wandteilseitigen Ende Mittel, wie einen Gewindeabschnitt (7), zur Befestigung eines Zugankers aufweist.

11. Stutzen nach einem der Ansprüche 1 bis 7, 9 oder 10
**dadurch gekennzeichnet, daß** der Rohransatz (4) aus einem Außenrohrabschnitt (4a) und aus einem Innenrohrabschnitt (4b) besteht, die konzentrisch zueinander angeordnet und fußseitig miteinander verbunden sind, wobei zumindest der Außenrohrabschnitt (4a) aus einem unter Krafteinwirkung plastisch verformbaren Material besteht.

12. Stutzen nach einem der Ansprüche 1 bis 7 oder 9 bis 11
**dadurch gekennzeichnet, daß** der Rohransatz (4) einen insbesondere kreisringförmigen endständigen und zentrisch nach außen aufbördelbaren Bördelabschnitt (4a, 4c) und einen Basisabschnitt (4b, 4d) aufweist.

13. Stutzen nach Anspruch 12,
**dadurch gekennzeichnet, daß** sich die Wandstärke (sw) des Bördelabschnitts (4c) ausgehend von einem am Basisabschnitt (4d) befindlichen Fuß auf ein freies Ende des Bördelabschnitts (4c) hin verjüngt.

14. Stutzen nach Anspruch 12 oder 13,
**dadurch gekennzeichnet, daß** der Bördelabschnitt (4a, 4c) und der Basisabschnitt (4b, 4d) mit axialem Abstand (X, A) zueinander angeordnet sind.

15. Stutzen nach einem der Ansprüche 1 bis 14,
**dadurch gekennzeichnet, daß** das Rohrstück (2) und/oder der Rohransatz (4) ein Innengewinde (16) zum Verschrauben mit einer Armatur (20) oder einem Anschlußstück (15, 17) für eine Rohrleitung aufweisen.

16. Stutzen nach einem der Ansprüche 1 bis 15,
**dadurch gekennzeichnet, daß** das Rohrstück (2) derart ausgebildet ist, daß eine Schlauchleitung (18) darauf aufgesteckt werden kann.

17. Stutzen nach einem der Ansprüche 1 bis 7,
**dadurch gekennzeichnet, daß** der Rohransatz (4) zur Bildung der Verbindung mit dem Wandteil (1, 1a) radialelastisch verformbar ist und endseitige Rastmittel (10) zum Zusammenwirken mit der Innenseite des Wandteils (1, 1a) aufweist.

18. Stutzen nach Anspruch 17,
**dadurch gekennzeichnet, daß** der Rohransatz (4) zur Ausbildung der radialelastischen Verformbarkeit eine axiale Mehrfachschlitzung (11) aufweist.

19. Stutzen nach Anspruch 17 oder 18,
**gekennzeichnet durch** einen in den Rohransatz (4) einsetzbaren und mit dem Rohransatz (4) verrastbaren hohlen Spreizkörper (12).

20. Stutzen nach einem der Ansprüche 1 bis 19,
**dadurch gekennzeichnet, daß** das Wandteil (1, 1a) eine Wand (1a) eines Druckbehälters (P) ist, von der das Rohrstück (2) nach innen oder außen absteht.
